# EUROPEAN PATENT SPECIFICATION

(11) **EP 2 673 781 B1**
(45) Date of publication and mention of the grant of the patent: **08.07.2020**
(21) Application number: 12744758.9
(22) Date of filing: 07.02.2012
(51) Int. Cl.: G21D 1/00, G08B 13/12

(54) **NUCLEAR POWER FACILITY**
KERNKRAFTANLAGE
INSTALLATION DE CENTRALE NUCLÉAIRE

(30) Priority: 06.02.2012 US 201213366909; 28.07.2011 US 201161512644 P; 08.02.2011 US 201161440545 P
(43) Date of publication of application: 18.12.2013
(73) Proprietor: BWXT mPower, Inc., Charlotte, NC 28277 (US)
(72) Inventor: NOEL, James, L., Monroe, VA 24574 (US); SCOTT, Alan, Harpers Ferry, WV 25425 (US); GORDON, Robert A., Mount Airy, MD 21771 (US)
(74) Representative: D Young & Co LLP
(86) International application number: PCT/US2012/024170
(87) International publication number: WO 2012/109264

(56) References cited:
- EP-A2- 0 004 048
- US-A- 3 037 726
- US-A- 3 812 484
- US-A- 4 304 633
- US-A- 4 304 633
- US-A1- 2009 271 207
- US-A1- 2010 303 192
- -: "NPG LEARNING SERVICES General Employee Training PROTECTED AREA ACCESS", , 1 May 2009 (2009-05-01), XP055356727, Retrieved from the Internet: URL:http://www.pge.com/microsite/diablo/do cs/ProtectedAreaAccess.pdf [retrieved on 2017-03-21]
- ROGERS F C: "Underground nuclear power plants: environmental and economic aspects", NUCLEAR NEWS, AMERICAN NUCLEAR SOCIETY, LA GRANGE PARK, IL, US, 1 May 1971 (1971-05-01), pages 36-39, XP009107664, ISSN: 0029-5574
- 'Metalith Anti-Ram Vehicle and Blast Mitigation Barriers' INFRASTRUCTURE DEFENSE TECHNOLOGIES 06 May 2005, XP008172156 Retrieved from the Internet: <URL:http://www.the metalith.com/metalith-blasttests.html> [retrieved on 2012-05-30]
- STUBSTAD ET AL. DESIGN PROCEDURES FOR UNDERGROUND HEAT SINK SYSTEMS April 1979, XP008172159 Retrieved from the Internet: <URL:http://oai.dtic.mil/oai/oai? verb=getRecord&metadataPrefix=html&identifi er=ADA068926> [retrieved on 2012-05-30]
- Anonymous: "Diablo Canyon Power Plant - Google Maps", , 1 January 2019 (2019-01-01), XP055539554, Retrieved from the Internet: URL:https://goo.gl/maps/ENamdDasv3u [retrieved on 2019-01-09]
- -: "Google Maps Flamanville Nuclear Power Station", , 1 January 2019 (2019-01-01), XP055539552, Retrieved from the Internet: URL:https://goo.gl/maps/zZN96rBRgin [retrieved on 2019-01-09]
- -: "Druckwasserreaktor - Wikipedia", , 30 December 2011 (2011-12-30), XP055539767, Retrieved from the Internet: URL:https://de.wikipedia.org/w/index.php?t itle=Druckwasserreaktor&oldid=97704698 [retrieved on 2019-01-09]

## Description

### BACKGROUND

The following relates to the nuclear power generation arts, nuclear power facility arts, nuclear reactor facility layout arts, and related arts.

Constructing a nuclear power facility is an extensive undertaking. Initial concept through plant design and construction to generation of electrical power output can take in excess of a decade or longer and can cost hundreds of millions of dollars or more.

A nuclear power facility is designed to be a secure site. An emergency core cooling system (ECCS) is designed in conjunction with the nuclear reactor to safely shut down the nuclear reactor in the event of a loss of coolant accident (LOCA), loss of heat sink accident, or other event potentially impacting safety. Additionally, a nuclear power facility can be an attractive target for terrorists, violent activist groups, or the like. Accordingly most countries take steps to secure nuclear power facilities against external attack.

In the United States, regulations promulgated by the Nuclear Regulatory Commission (NRC) specify rules for securing a nuclear power facility against external attack. *See*, *e.g.* 10 C.F.R. Part 73 (*available at* http://www.nrc.gov/reading-rm/doc-collections/cfr/part073/, last accessed January 28, 2011). In accordance with NRC regulations, a protected area is defined, whose perimeter is protected by physical barriers limiting access into the protected area. 10 C.F.R. § 73.55(e)(8). Vital areas including at least the reactor control room, the spent fuel pool, and certain critical alarm components are located within the protected area. 10 C.F.R. § 73.55(e)(9). An isolation zone is maintained in outdoor areas adjacent to a protected area perimeter barrier. 10 C.F.R. § 73.55(e)(7). The isolation zone is sized and designed to permit unobstructed observation and assessment of activities on either side of the protected area barrier, and is monitored with suitable intrusion detection equipment capable of detecting and recording attempted or actual penetration of the protected area perimeter barrier before completed penetration of the protected area perimeter barrier, *Id.*

While NRC regulations specify certain aspects of nuclear facility security, it is recognized that each facility presents unique geographical, terrain, facility size, and other considerations, Accordingly, a site-specific security plan is developed for each nuclear power facility. *See generally* C.F.R. Title 10 Part 73.

Jurisdictions outside of the United States typically have an analog regulatory agency to the NRC which promulgates regulations for securing nuclear power facilities, "NPG LEARNING SERVICES General Employee Training PROTECTED AREA ACCESS", May 2009, provides details of Protected Area Access training topics and includes a map of DIABLO CANYON NUCLEAR POWER PLANT.

### BRIEF SUMMARY

The invention is defined by the appended claims.

In accordance with certain teachings disclosed herein, an apparatus comprises: a nuclear island including at least one nuclear reactor; a turbine island including at least a turbine building housing at least one turbine driven by steam generated by the nuclear reactor; a protected area having a perimeter protected by at least one fence surrounding the perimeter; and an isolation zone surrounding the protected area and including intrusion detection devices configured to detect unauthorized approach toward the protected area. The nuclear island is disposed inside the protected area, and the turbine island is disposed outside of and spaced apart from the protected area.

In accordance with certain teachings disclosed herein, an apparatus comprises: a nuclear island including at least a nuclear reactor; a turbine building housing at least one turbine driven by steam generated by the nuclear reactor; a protected area having a perimeter protected by at least one fence surrounding the perimeter; and an isolation zone surrounding the protected area and including intrusion detection devices configured to detect unauthorized approach toward the protected area. The isolation zone includes an engagement space surrounding the protected area and has a physical barrier field at least 9 metres (30 feet) wide and a sensor array surrounding the engagement space and configured to detect unauthorized approach toward the engagement space.

In accordance with ceitain teachings disclosed herein, an apparatus comprises a nuclear island including at least a nuclear reactor, and a turbine island including at least one turbine driven by steam generated by the nuclear reactor. The nuclear island and the turbine island are spaced apart from each other, The spacing between the nuclear island and the turbine island is 15 metre (50 feet) in some embodiments, and more preferably 30.48 metres (100 feet), and still more preferably 40 metres (130 feet). In some embodiments the nuclear island is maintained at a higher security level than the turbine island.

In accordance with certain teachings disclosed herein, an apparatus comprises: at least one nuclear reactor; at least one turbine driven by steam generated by the nuclear reactor; and an ultimate heat sink disposed underground and in operative communication with the nuclear reactor.

### BRIEF DESCRIPTION OF THE DRAWINGS

FIGURE 1 diagrammatically shows an overhead (i.e., plan) view of a "2-pack" nuclear power facility including a nuclear island with two nuclear reactors,
FIGURE 2 diagrammatically shows an overhead (i.e., plan) view of a "4-pack" nuclear power facility including a nuclear island with four nuclear reactors.
FIGURE 3 diagrammatically shows an overhead (i.e., plan) view of a nuclear power facility in which the condensers are located outside the perimeter fence.

### DETAILED DESCRIPTION OF PREFERRED EMBODIMENTS

A nuclear power facility is typically designed for a particular electrical power output, which sets the size and other characteristics of the nuclear reactor and associated radiation containment and emergency core cooling system (ECCS), the electrical power-generating turbine or turbines, and so forth. The reactor is located in a containment building, critical ECCS components and rector support systems (i.e., spent fuels, rad waste) are located inside or closely proximate to the containment building thus forming a "nuclear island". Remaining components (i.e., the "balance of plant") including turbines, condensers, the electrical power distribution grid (i.e., the "switchyard"), are located near the nuclear island. Turbines for generating electrical power are driven by steam generated by the nuclear island, and are housed in a turbine building in close proximity to the nuclear island. This minimizes the lengths of steam lines running to the turbine building and feedwater lines running to the nuclear island, thus minimizing transient heat loss, piping considerations, and parasitic power loss (i.e., pumps) within this linkage, and enables the nuclear island and turbine building to constitute a single contiguous protected area for security purposes. The facility site is selected based on various considerations such as geographic proximity to power customers, foundational building support, seismic stability, availability of water for cooling, and so forth.

Facility design also incorporates security, especially for "vital equipment", which is defined by the Nuclear Regulatory Commission (NRC) as "any equipment, system, device, or material, the failure, destruction, or release of which could directly or indirectly endanger the public health and safety by exposure to radiation. Equipment or systems which would be required to function to protect public health and safety following such failure, destruction, or release are also considered to be vital." 10 C.F.R. § 73.2. All vital equipment must be located in vital areas which in turn must be located in a protected area. 10 C.F.R. § 73.55(e)(9). The protected area is a limited access area that is routinely patrolled by security personnel and is protected by physical barriers. *See* 10 C.F.R. § 73.55(e)(8). The protected area is in turn surrounded by an isolation zone in outdoor areas that is sized to enable unimpeded observation of activities in both the isolation zone and the protected area, and is monitored with automated (and recording) intrusion detection sensors and alarms. Jurisdictions outside the United States are typically governed by similar security regulations or guidelines.

Conventionally, the nuclear power facility is constructed with a compact layout, with the turbine building and closely proximate nuclear island forming the core of a contiguous protected area. In some facility layouts, other portions of the balance of plant such as the switchyard and/or condensers are also included within the protected area. To accommodate elevated structures such as roof-mounted chillers for the turbine building, guard towers are established at suitable locations near the protected area perimeter to ensure that security personnel have continuous, unimpeded, and overlapping view of the entire protected area perimeter.

As disclosed herein, the conventional approach toward nuclear power facility layout has certain disadvantages, which are overcome by improvements disclosed herein.

In existing layouts for nuclear power facilities, operation and maintenance costs are high. For example, security costs are estimated to be approximately $25-30 million per year. This cost can be problematic for smaller nuclear power facilities, such as proposed small modular reactor (SMR) designs that produce no more than 300 megawatts (electrical). Moreover, the use of guard towers can be problematic since personnel posted in the guard towers are sedentary, which is not conducive to continual alertness that is desired of security personnel. In view of this, stationary guard postings ideally should have a personnel rotation every two hours or so. As stationary locations, guard towers near the perimeter are also known and well-defined targets for any external attack.

Existing nuclear plant facility layouts also complicate construction, maintenance, repair, and upgrade operations. Any work performed on the nuclear island, or in the turbine building, or anywhere else within the protected area must be performed by personnel who are cleared to work in the protected area. Where work is performed by contractors or other "outside" personnel, these personnel must be escorted while inside the protected area. Moreover, major upgrades within the protected area, such as adding a new turbine to a turbine island within the protected area of an existing facility, may require review and approval by one or more governing regulatory agency.

Still further, while existing nuclear power facilities are compact, they place substantial operational components within the protected area. This leads to a relatively large number of personnel present inside the compact protected area, which can be problematic in terms of security, personnel evacuation procedures, and so forth.

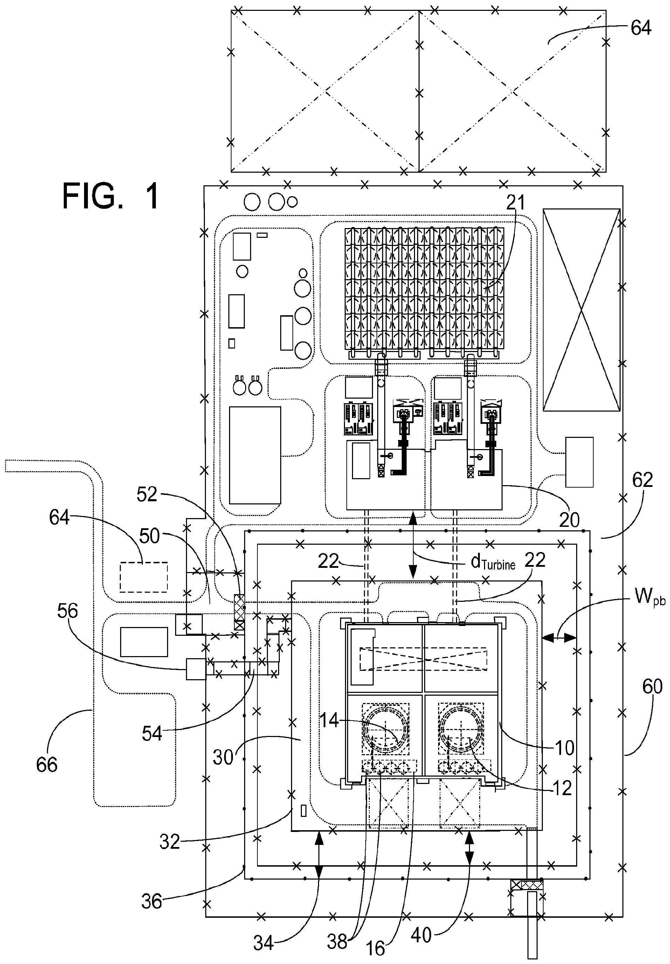

With reference to FIGURE 1, an improved nuclear power facility disclosed herein is shown in plan view (that is, diagrammatic overhead view). The nuclear power facility includes a nuclear island comprising a containment building **10** containing at least one nuclear reactor (illustrative FIGURE 1 shows a "two pack" containing two nuclear reactors **12**, **14**, and also shows a spent fuel pool **16** inside the containment building **10** for storing spent fuel after its removal from the reactor), and a turbine island including at least a turbine building **20** housing at least one turbine. The nuclear reactor or reactors **12**, **14** may comprise substantially any type of nuclear reactor utilizing a primary circuit and a steam circuit, and in preferred embodiments comprises a pressurized water reactor (PWR). The nuclear reactor or reactors may be operatively connected with an external steam generator (not shown, but in such embodiments also housed within the containment building) via a primary coolant loop. In the illustrative example, the nuclear reactors **12**, **14** are "integral" nuclear reactors in which the steam generators are located inside the reactor vessels. Some examples of this latter configuration are set forth in Thome et al., "Integral Helical Coil Pressurized Water Nuclear Reactor", U.S. Pub. No. 2010/0316181 A1 published December 16, 2010, and at http://www.babcock.com/products/modular_nuclear/ (last accessed January 29, 2011) (describing the B&W mPower™ integral small modular reactor design which is under development). U.S. Pub. No. 2010/0316181 A1 discloses an integral PWR employing a steam generator with helical coils; however, more generally the integral steam generator may employ straight tubes, e.g. a vertical tube once-through steam generator (OTSG) or another tubing configuration, and the secondary coolant may flow either inside the tubes (tube-side) with the primary coolant flowing around the tubes, or the secondary coolant may flow in a shell surrounding the tubes (shell-side) with the primary coolant flowing through the tubes. Whether an integral steam generator or a separate steam generator is employed, the purpose of the steam generator is to bring primary coolant (typically light water, although another type of primary coolant such as heavy water is also contemplated) flowing in the reactor into thermal communication with secondary coolant water (i.e., "feedwater") that is thereby heated and converted to steam. Although there is thermal communication between the primary and secondary coolant within the steam generator, the primary and secondary coolant remain in fluid separation, that is, there is no intermixing between the primary and secondary coolant.

The secondary coolant steam flows via a steam line from the nuclear island to the turbine island to drive a turbine (or, turbine/electrical generator assembly) to generate electricity that is distributed to customers or other end users by the switchyard. In some embodiments the secondary coolant water flows in a closed loop path wherein the steam is condensed back into liquid water (i.e., liquid secondary coolant water) at the turbine island or condensers **21** and flows back to the nuclear island via a feedwater line. The steam line and optional feedwater line passes between the nuclear island and the turbine island via utility trenches **22**.

It is to be understood that although diagrammatic FIGURE 1 shows two nuclear reactors (i.e., a "2-pack"), more generally the nuclear island may include one nuclear reactor, two nuclear reactors, three nuclear reactors, four nuclear reactors, five nuclear reactor, six nuclear reactors, or so forth. When multiple reactors are included, it is contemplated for the nuclear island to be divided into two or more non-contiguous protected areas, or alternatively for the multiple reactors to be disposed within a single contiguous protected area (as in illustrative FIGURE 1). Moreover, it is to be understood that diagrammatic FIGURE 1 shows only selected salient features, while omitting numerous features known in the art.

With continuing reference to FIGURE 1, a protected area **30** has a perimeter protected by at least one fence **32**. An isolation zone **34** surrounds the protected area **30** and includes intrusion detection devices **36** (diagrammatically indicated in FIGURE 1 by a dashed line surrounding the protected area **30**; also suitably referred to as a "PIDAS" perimeter where the acronym "PIDAS" stands for "Perimeter Intrusion Detection and Assessment System"), such as thermal imaging cameras, vibration sensors, microwave detectors, motion detection cameras, various combinations thereof, or so forth configured to detect unauthorized approach toward the protected area **30**. In embodiments intended for use in the United States, the type and density of sensors, types and number of physical barriers employed in the isolation zone, alarms in the protected area, and so forth suitably comply with NRC regulations for the isolation zone and protected area, for example as set forth in 10 C.F.R. § 73.55.

As seen in FIGURE 1, the nuclear island is disposed inside the protected area **30**. (If multiple reactors are disposed at multiple contiguous and/or non-contiguous nuclear islands, the protected area encompasses all these contiguous and/or non-contiguous nuclear islands - in the illustrative example the two nuclear reactors **12**, **14** are disposed in the single contiguous protected area **30**). However, the turbine island is disposed outside of, and spaced apart from, the protected area **30**. This arrangement takes advantage of the recognition made herein that (1) the turbine and related components are not vital equipment that must be in the protected area, and (2) the turbine and related components can be positioned relatively far away from the nuclear island.

Regarding item (1), the turbine island is not a vital area because the failure, destruction, or other compromising of the turbine island could not directly or indirectly lead to a release of radiation, and the turbine island is not required to function to protect public health and safety during any cognizable emergency event. *Cf.* 10 C.F.R. § 73.2. The turbine is driven by steam generated by the nuclear island; however, the steam driving the turbine is secondary coolant that is not contaminated with any radioactive material. A break in (or other failure or shutdown of) the steam line running from the nuclear island to the turbine island, or a break in (or other failure or shutdown of) the feedwater line running from the turbine island to the nuclear island, would not cause (either directly or indirectly) a release of radioactive material. At most, such a break or failure or shutdown could constitute a loss of heat sink event in which heat sink of the nuclear reactor by flow of secondary coolant in the steam generator might be compromised. The emergency core cooling system (ECCS) disposed with the reactor inside the containment building accommodates any loss of heat sink event by immediately shutting down the reactor, depressurizing any transient pressure rise caused by the loss of heat sink, and initiating cooling of the reactor core. The ECCS performs this shutdown using shutdown control rods, soluble poison injection, steam condensers located within the containment building, cooling water stored in a refueling water storage tank (RWST) located within the containment building, or other suitable apparatus, without releasing any primary coolant into the containment building ambient (much less into the external environment).

Regarding item (2), it is recognized herein that the turbine and related components can be positioned relatively far away from the nuclear island. This arrangement takes advantage of the ability to begin construction on the balance of the plant (i.e., structures outside of the nuclear island) in the pre-licensing stage, and supports parallel construction of the nuclear island with the balance of plant thereafter, thereby enabling realization of otherwise unobtainable construction benefits.

Conventionally, the turbine is located in close proximity to the nuclear island in order to minimize the length of the steam line running from the nuclear island to the turbine building. The rationale for this is that the steam line carries steam heated by the nuclear reactor via the steam generator, and so a longer steam line leads to more heat loss and lowered efficiency. However, comparison with other types of facilities, such as fossil fuel facilities, indicates that this concern is misplaced and that a steam line of order 30.48 metres (100 feet) or longer is feasible without problematic loss of heat.

In some embodiments the steam line and the feedwater line are at or below ground level, e.g. in the illustrative utility trenches **22** in FIGURE 1. This can be advantageous in terms of enabling a greater amount of thermal insulation so as to further reduce any heat loss in the steam pipe. Burying these lines also provides improved security against external attack targeting these lines. Additionally or alternatively, in some embodiments the nuclear island is at least partially subterranean. In some embodiments the nuclear island is below ground and the protected area **30** has a maximum elevation of less than 6.10 metres (20 feet). In some embodiments the nuclear island is below ground and the protected area **30** has a maximum elevation of less than 10.97 metres (36 feet).

While a facility at lower elevation (e.g., partially or wholly subterranean) is generally considered to be vulnerable to attack from a higher elevation, it is recognized herein that a partially or wholly subterranean facility has certain advantages from a security standpoint. By partially or wholly burying the nuclear island and placing the turbine outside of the protected area, the maximum elevation of the protected area can be made low, e.g. less than 6.10 metres (20 feet) in some embodiments, and less than 10 feet in some embodiments. This reduces the potential of having any obstructed view in the protected area. Indeed, in some embodiments it is contemplated to have no guard towers, since they are not needed to provide an unobstructed view over the entire protected area. The subterranean arrangement also can provide enhanced protection against aerial or projectile attack.

In some embodiments the ultimate heat sink (UHS) is both subterranean and also located inside the protected area within or closely proximate to the nuclear island. For example, in illustrative FIGURE 1 a plurality of UHS pools **38** are located in the protected area **30**. This arrangement further reduces the possibility that an external attack could sever pipes connecting the ECCS with the ultimate heat sink so as to compromise ECCS operation.

Indeed, as disclosed herein, the security plan for the nuclear power facility of FIGURE 1 is substantially different from that conventionally employed at nuclear power facilities. The objectives are: (1) minimize the size of the protected area (even at the expense of a larger overall nuclear power facility); (2) minimize elevation within the protected area; (3) maximize delay elements; and (4) maximize operational efficiency.

Item (3) is accomplished in the illustrative example of FIGURE 1 by creating an engagement space **40** surrounding the protected area **30** and having a physical barrier field at least 9.14 metres (30 feet) wide, and deploying the sensor array **36** surrounding the engagement space **40** and configured to detect unauthorized approach toward the engagement space **40**. The physical barrier field suitably comprises a field of barbed wire, barbed tape, or razor wire, and has a width (denoted W_{pb} in FIGURE 1) that is sufficient to substantially delay the time between detection of an intrusion via the surrounding sensor array and penetration of such intrusion to the perimeter (e.g., fence **32**) of the protected area **30**. Toward this end, while the physical barrier field is at least 9.14 metres (30 feet) wide, it is more preferably at least 24.38 metres (80 feet) wide, and still more preferably at least 30.48 metres (100 feet) wide. In conjunction with this, the spacing between the turbine -island and the protected area **30** (denoted "d_{turbine}" in FIGURE 1) is preferably at least 15.24 metres (50 feet), and more preferably by at least 30.48 metres (100 feet), and still more preferably at least 39.62 metres (130 feet). The combination of a low elevation protected area and the wide physical barrier field ensures that any attacker is exposed over an extended period of time after detection before any possibility of the attacker entering the protected area. This delay paradigm is also incorporated into designed entryways to the protected area **30**. For example, with reference to FIGURE 1 a road **50** leading into the protected area **30** is (in addition to being monitored by security forces who also implement suitable vehicle search protocols) blocked by a movable physical barrier field portion **52** mounted on a sled or the like so that it can be moved off the road to allow an authorized vehicle to pass after it has been searched and cleared for entry. Similarly, a security personnel entry path **54** running from a security building **56** to the protected area **30** includes an extended dogleg equipped with deployable delay barriers, so that any intruder who gains access to the security building **56** and attempts to enter the protected area **30** via the security personnel entry path **54** will be delayed within the engagement space **40** for an extended period of time. Toward this end, the security personnel entry path **54** is preferably above-ground and in unobstructed view of the protected area **30**.

In this security paradigm, security personnel are disposed in the protected area **30** as mobile patrols and/or ensconced within the reactor building within a short distance from multiple ballistically-protected defensive positions. In some embodiments, there are no guard towers or other stationary guard postings. By employing mobile patrols, and multiple defensive positions, security personnel tend to stay alert as they are frequently moving. The low elevation of the protected area **30** ensures unobstructed view of the entire protected area **30** and isolation zone **34**, and the wide physical barrier field of the engagement space **40** ensures that any attempted intrusion will be delayed for an extended period of time.

With continuing reference to FIGURE 1, in some embodiments a further security perimeter **60** is defined outside of the isolation zone/protected area. This further security zone is referred to herein as a security controlled area **62**, and it surrounds both the isolation zone/protected area and other portions of the nuclear power facility such as the turbine island and the condensers **21**. In the embodiment of FIGURE 1 the security controlled area **62** does not include an electrical switch yard **64**; however, in some embodiments the security controlled area surrounds the switch yard. The security controlled area **62** surrounds the nuclear island and the turbine island, and has lower security than the protected area **30.** In illustrative FIGURE 1, the security controlled area **62** comprises the alarmed perimeter fence **60** and a vehicle barrier system surrounding an outer perimeter **60** of the security controlled area **62**, and a vehicle search station **64** at the entrance of each road entering the security controlled area **62**. In some embodiments, the shortest distance from the outer perimeter **60** of the security controlled area **62** to the protected area **30** is greater than a blast radius determined by a blast analysis. In this case, the possibility that a detonation of a vehicle loaded with explosives could cause damage inside the protected area **30** is minimized if not eliminated. As a consequence, in some embodiments it is contemplated to locate the parking lot **66** for the nuclear reactor facility outside the security controlled area **62**, without any vehicle search station at the entrance to the parking lot **66**. Rather, only vehicles that enter the security controlled area **62** are searched (at the vehicle search station **64** in illustrative FIGURE 1).

The disclosed nuclear power facility layout advantageously provides increased security for a given operational manpower level. For example, since vehicles entering the parking lot **66** do not need to be searched (as such vehicles remain outside of the blast radius as determined by a blast analysis), personnel who would otherwise be assigned to searching vehicles entering the parking lot can instead be allocated to other tasks relating to security, maintenance, plant inspection, or so forth. Placement of the turbine island outside of the protected area **30** similarly enables more efficient allocation of human resources in the vicinity of the turbine, and/or allows reallocation of some such personnel to the nuclear island.

Another advantage of the disclosed approach is that it facilitates modular construction of the nuclear power facility. Typically, construction cannot begin until final approval for the entire nuclear power facility has been granted by the NRC or other governing regulatory entity. With the improved layout disclosed herein, it may be possible to begin construction on the turbine island and other facilities located outside of the protected area **30** before final approval has been granted for the nuclear island.

The illustrative nuclear power facility of FIGURE 1 is an illustrative "two-pack" design, in which the containment building **10** is constructed as two adjacent containment buildings in the illustrative single contiguous protected area **30**. Each containment building contains one of the two small modular reactor (SMR) units **12**, **14**, with each SMR unit outputting no more than 300 megawatts (electrical). In some embodiments the two SMR units **12**, **14** are two small modular pressurized water reactors (PWRs). The nuclear island of this embodiment is almost entirely subterranean, with only a slight protrusion above ground level. This, together with placement of the turbine island outside of the protected area **30**, allows the protected area **30** to have a low elevational profile giving security personnel an unobstructed view over the entire protected area and adjacent surrounding isolation zone.

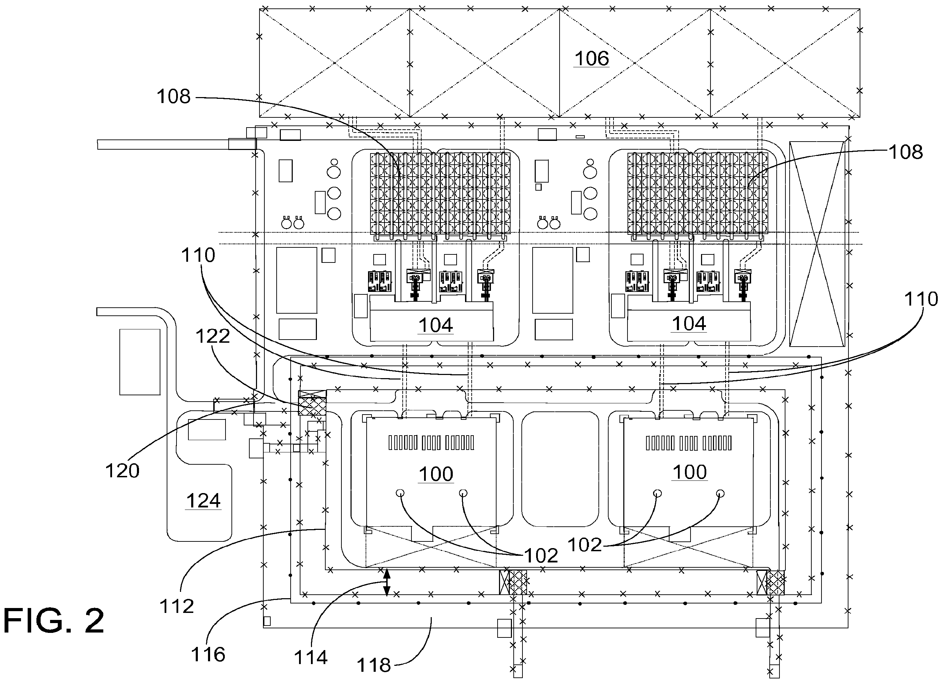

With reference to FIGURE 2, a plan view of another illustrative nuclear power facility is shown. The nuclear power facility layout shown in FIGURE 2 is a "4-pack" layout which includes four modular PWR reactors. The plan view of FIGURE 2 shows two reactor service buildings **100** that include or (are disposed over subterranean) radiation waste facilities, fuel handling function/equipment, access control, control room, the reactor containment buildings, and ultimate heat sinks. The locations of the four reactors, which are suitably SMRs, correspond approximately to four illustrated reactor building equipment hatches **102** providing access to the SMRs through the reactor service buildings **100**. Other illustrated features include: two turbine buildings **104**; the switchyard **106**; air-cooled condensers **108**; and tunnels **110** (e.g., for passing the feedwater and steam lines between the nuclear island and the turbine island). A protected area **112** is configured similarly to the protected area **30** of the two-pack design of FIGURE 1. An engagement space **114** surrounding the protected area **112** is equivalent to the engagement space **40** of the embodiment of FIGURE 1 and includes the physical barrier of barbed wire, barbed tape, or razor wire. An array of intrusion detection devices or PIDAS **116** surrounds the engagement space **114** and is equivalent to the PIDAS **36** of the embodiment of FIGURE 1. A security controlled area **118** is equivalent to the security controlled area **62** of the embodiment of FIGURE 1. A road **120** entering the protected area is controlled in the engagement space **114** by a motorized razor wire sled **122**, providing access control equivalent to that provided by the movable physical barrier field portion **52**. The parking lot **124** is again located outside the security controlled area **118**.

The disclosed improved nuclear power facilities are suitably employed for substantially any type of nuclear power facility. The reduced operating and management costs associated with the disclosed improvements are especially useful in the context of small modular reactor facilities that generate no more than 300 megawatts (electrical).

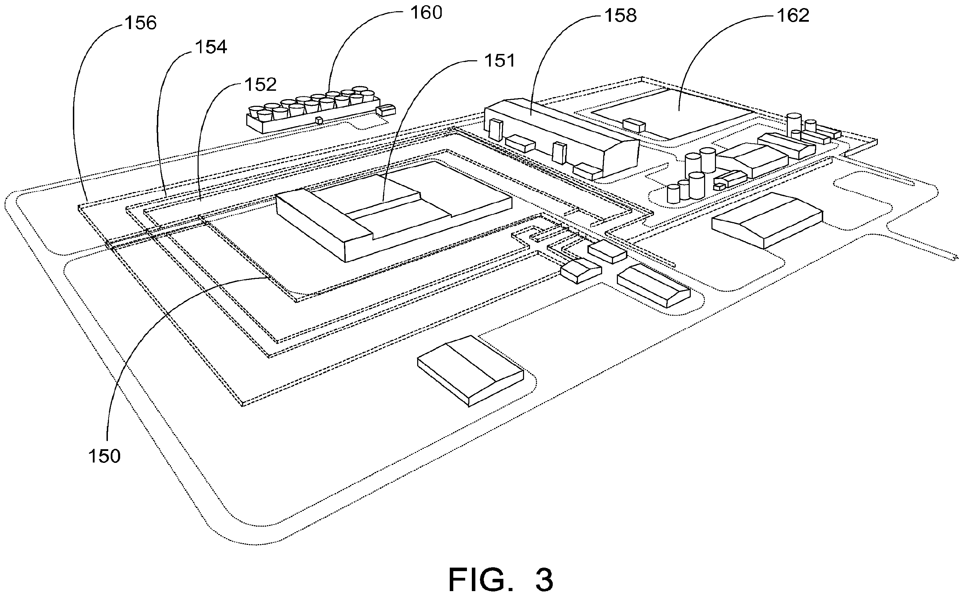

With reference to FIGURE 3, an embodiment is shown which again includes a protected zone **150** containing the nuclear island **151** surrounded by an engagement space **152** monitored by a surrounding PIDAS **154**, with an outermost security controlled area **156**. As in previous embodiments, the turbine island **158** is located outside the protected zone **150** but inside the security controlled area **156.** However, in the alternative embodiment of FIGURE 3, the condensers **160** are located outside the perimeter fence (i.e., outside the security controlled area **156**). The switchyard **162** is internal to the perimeter fence (i.e., inside the security controlled area **156**), and additional buildings internal to the perimeter fence are deployed in alternative locations.

This application has described one or more preferred embodiments. Modifications and alterations may occur to others upon reading and understanding the preceding detailed description. It is intended that the application be construed as including all such modifications and alterations insofar as they come within the scope of the appended claims.

## Claims

1. An apparatus comprising:
a partially-subterranean nuclear island including at least a nuclear reactor (12, 14);
a turbine island including at least one turbine driven by steam generated by the nuclear reactor and at least a turbine building (20) housing the at least one turbine;
a protected area (30) having a perimeter protected by at least one fence (32) surrounding the perimeter;
an isolation zone (34) comprising an engagement space (40) surrounding the protected area and having a physical barrier field having a width of at least 9 meters (30 feet) and a sensor array (36) surrounding the engagement space and configured to detect unauthorized approach toward the engagement space;
wherein the nuclear island is disposed inside the protected area;
wherein the turbine island is disposed outside of and spaced apart from the protected area and the isolation zone; and
wherein the nuclear island and the turbine island are spaced apart from each other.

2. The apparatus of claim 1, wherein at least two layers of security separate the nuclear island and the turbine island.

3. The apparatus of any one of claims 1-2, wherein the nuclear island is adapted to be maintained at a higher security level than the turbine island.

4. The apparatus of any one of claims 1-3, wherein the nuclear island and the turbine island are spaced apart by a distance selected from the group comprising: at least 15 metres (50 feet), at least 30 metres (100 feet), and at least 40 metres (130 feet).

5. The apparatus of any one of claims 1-4, wherein the nuclear island is at a relatively lower elevation than the turbine island.

6. The apparatus of any one of claims 1-4, wherein the nuclear island is subterranean and the turbine island is mostly or completely above-ground.

7. The apparatus of any one of claims 1-6, further comprising a subterranean ultimate heat sink in operative communication with the nuclear island.

8. The apparatus of claim 1 wherein the physical barrier field has a width of at least 24 metres (80 feet).

9. The apparatus of claim 8 wherein the physical barrier field comprises a field of barbed wire, barbed tape, or razor wire.

10. The apparatus of claim 8 or 9 further comprising: a security controlled area (62) surrounding the nuclear island and the turbine island, the security controlled area being adapted to have lower security than the protected area.

11. The apparatus of claim 10 wherein the security controlled area comprises one or more selected from the group comprising: a fence surrounding an outer perimeter of the security controlled area; and a vehicle barrier system comprising a vehicle search station at the entrance of each road entering the security controlled area; and a parking lot disposed outside the security controlled area, there being no vehicle search station at the entrance to the parking lot.

12. The apparatus of any one of claims 1-11 wherein a steam line flowing steam from the nuclear island to the turbine island is disposed at or below ground level.

13. The apparatus of any one of claims 1-12 wherein the operational combination of the nuclear island and the turbine island is a small modular reactor (SMR) rated to generate no more than 300 megawatts of electrical power.

14. The apparatus of any one of claims 1-13, wherein the apparatus does not include any guard towers.

15. The apparatus of any one of claims 1-14, wherein the nuclear island is below ground and the protected area has a maximum elevation of less than 11 metres (36 feet).

## Patentansprüche

1. Vorrichtung, die Folgendes umfasst:
eine teilweise unterirdische Kerninsel, die zumindest einen Kernreaktor (12, 14) enthält;
eine Turbineninsel, die mindestens eine Turbine, die durch Dampf, der von dem Kernreaktor erzeugt wird, angetrieben wird, und zumindest ein Turbinengebäude (20), das die mindestens eine Turbine aufnimmt, enthält;
einen geschützten Bereich (30), der einen Umfang aufweist, der durch mindestens einen Zaun (32), der den Umfang umgibt, geschützt ist;
eine Isolationszone (34), die einen Eingriffraum (40), der den geschützten Bereich umgibt und ein Gebiet mit mechanischen Hindernissen aufweist, das eine Breite von mindestens 9 Metern (30 Fuß) aufweist, und eine Sensoranordnung (36), die den Eingriffraum umgibt und konfiguriert ist, eine nicht autorisierte Annäherung in Richtung des Eingriffraums zu detektieren, umfasst;
wobei die Kerninsel in dem geschützten Bereich angeordnet ist;
wobei die Turbineninsel außerhalb des geschützten Bereichs und der Isolationszone und von diesen beabstandet angeordnet ist; und
wobei die Kerninsel und die Turbineninsel voneinander beabstandet sind.

2. Vorrichtung nach Anspruch 1, wobei mindestens zwei Sicherheitsschichten die Kerninsel und die Turbineninsel trennen.

3. Vorrichtung nach einem der Ansprüche 1-2, wobei die Kerninsel dafür ausgelegt ist, auf einem höheren Sicherheitsniveau gehalten zu werden als die Turbineninsel.

4. Vorrichtung nach einem der Ansprüche 1-3, wobei die Kerninsel und die Turbineninsel um einen Abstand voneinander entfernt sind, der aus der Gruppe ausgewählt ist, die Folgendes umfasst: mindestens 15 Meter (50 Fuß), mindestens 30 Meter (100 Fuß) und mindestens 40 Meter (130 Fuß).

5. Vorrichtung nach einem der Ansprüche 1-4, wobei sich die Kerninsel in einer vergleichsweise geringeren Höhe befindet als die Turbineninsel.

6. Vorrichtung nach einem der Ansprüche 1-4, wobei die Kerninsel unterirdisch ist und die Turbineninsel hauptsächlich oder vollständig oberirdisch ist.

7. Vorrichtung nach einem der Ansprüche 1-6, die ferner eine unterirdische ultimative Wärmesenke umfasst, die sich in betriebstechnischer Kommunikation mit der Kerninsel befindet.

8. Vorrichtung nach Anspruch 1, wobei das Gebiet mit mechanischen Hindernissen eine Breite von mindestens 24 Metern (80 Fuß) aufweist.

9. Vorrichtung nach Anspruch 8, wobei das Gebiet mit mechanischen Hindernissen ein Gebiet mit Stacheldraht, Bandstacheldraht oder Widerhakensperrdraht umfasst.

10. Vorrichtung nach Anspruch 8 oder 9, die ferner Folgendes umfasst: einen Sicherheitskontrollbereich (62), der die Kerninsel und die Turbineninsel umgibt, wobei der Sicherheitskontrollbereich dafür ausgelegt ist, eine niedrigere Sicherheit aufzuweisen als der geschützte Bereich.

11. Vorrichtung nach Anspruch 10, wobei der Sicherheitskontrollbereich ein oder mehrere Elemente umfasst, die aus der Gruppe ausgewählt werden, die Folgendes umfasst: einen Zaun, der einen Außenumfang des Sicherheitskontrollbereichs umgibt; und ein Fahrzeugsperrsystem, das eine Fahrzeugsuchstation an dem Eingang jeder Straße, die in den Sicherheitskontrollbereich eintritt, umfasst; und einen Parkplatz, der außerhalb des Sicherheitskontrollbereichs angeordnet ist, wobei sich keine Fahrzeugsuchstation an dem Eingang zu dem Parkplatz befindet.

12. Vorrichtung nach einem der Ansprüche 1-11, wobei eine Dampfleitung, in der Dampf von der Kerninsel zu der Turbineninsel strömt, auf oder unterhalb der Bodenhöhe angeordnet ist.

13. Vorrichtung nach einem der Ansprüche 1-12, wobei die Betriebskombination der Kerninsel und der Turbineninsel einem kleinen modularen Reaktor (SMR) entspricht, der dafür ausgelegt ist, nicht mehr als 300 Megawatt elektrischer Leistung zu erzeugen.

14. Vorrichtung nach einem der Ansprüche 1-13, wobei die Vorrichtung keine Wachtürme enthält.

15. Vorrichtung nach einem der Ansprüche 1-14, wobei die Kerninsel unter der Erdoberfläche ist und der geschützte Bereich eine maximale Höhe von weniger als 11 Meter (36 Fuß) aufweist.

## Revendications

1. Appareil comprenant :
un îlot nucléaire partiellement souterrain comportant au moins un réacteur nucléaire (12, 14) ;
un îlot conventionnel comportant au moins une turbine entraînée par de la vapeur d'eau générée par le réacteur nucléaire et au moins une salle des machines (20) abritant l'au moins une turbine ;
une zone protégée (30) ayant un périmètre protégé par au moins une clôture (32) entourant le périmètre ;
une zone d'isolement (34) comprenant un espace d'arrêt (40) entourant la zone protégée et ayant un champ de barrières physiques ayant une largeur d'au moins 9 mètres (30 pieds) et un réseau de capteurs (36) entourant l'espace d'arrêt et configuré pour détecter une approche non autorisée vers l'espace d'arrêt ;
dans lequel l'îlot nucléaire est disposé à l'intérieur de la zone protégée ;
dans lequel l'îlot conventionnel est disposé à l'extérieur et à l'écart de la zone protégée et de la zone d'isolement ; et
dans lequel l'îlot nucléaire et l'îlot conventionnel sont à l'écart l'un de l'autre.

2. Appareil de la revendication 1, dans lequel au moins deux couches de sécurité séparent l'îlot nucléaire et l'îlot conventionnel.

3. Appareil de l'une quelconque des revendications 1 et 2, dans lequel l'îlot nucléaire est adapté pour être maintenu à un plus haut niveau de sécurité que l'îlot conventionnel.

4. Appareil de l'une quelconque des revendications 1 à 3, dans lequel l'îlot nucléaire et l'îlot conventionnel sont espacés par une distance choisie dans le groupe comprenant : au moins 15 mètres (50 pieds), au moins 30 mètres (100 pieds), et au moins 40 mètres (130 pieds).

5. Appareil de l'une quelconque des revendications 1 à 4, dans lequel l'îlot nucléaire est à une altitude relativement plus basse que l'îlot conventionnel.

6. Appareil de l'une quelconque des revendications 1 à 4, dans lequel l'îlot nucléaire est souterrain et l'îlot conventionnel est en grande partie ou entièrement aérien.

7. Appareil de l'une quelconque des revendications 1 à 6, comprenant en outre une source froide d'ultime secours souterraine en communication opérationnelle avec l'îlot nucléaire.

8. Appareil de la revendication 1 dans lequel le champ de barrières physiques a une largeur d'au moins 24 mètres (80 pieds).

9. Appareil de la revendication 8 dans lequel le champ de barrières physiques comprend un champ de fil barbelé, de ruban barbelé, ou de fil rasoir.

10. Appareil de la revendication 8 ou 9 comprenant en outre : une zone de sécurité contrôlée (62) entourant l'îlot nucléaire et l'îlot conventionnel, la zone de sécurité contrôlée étant adaptée pour avoir une plus faible sécurité que la zone protégée.

11. Appareil de la revendication 10 dans lequel la zone de sécurité contrôlée comprend un ou plusieurs éléments choisis dans le groupe comprenant : une clôture entourant un périmètre externe de la zone de sécurité contrôlée ; et un système de barrières pour véhicules comprenant un poste de recherche de véhicule à l'entrée de chaque route pénétrant dans la zone de sécurité contrôlée ; et un parc de stationnement disposé à l'extérieur de la zone de sécurité contrôlée, aucun poste de recherche de véhicule ne se trouvant à l'entrée du parc de stationnement.

12. Appareil de l'une quelconque des revendications 1 à 11 dans lequel une conduite de vapeur d'eau faisant circuler de la vapeur d'eau de l'îlot nucléaire à l'îlot conventionnel est disposée au niveau du sol ou au-dessous de celui-ci.

13. Appareil de l'une quelconque des revendications 1 à 12 dans lequel la combinaison opérationnelle de l'îlot nucléaire et de l'îlot conventionnel constitue un petit réacteur modulaire (PRM) dimensionné pour ne pas générer plus de 300 mégawatts de puissance électrique.

14. Appareil de l'une quelconque des revendications 1 à 13, l'appareil ne comportant pas de tours de guet.

15. Appareil de l'une quelconque des revendications 1 à 14, dans lequel l'îlot nucléaire est au-dessous du sol et la zone protégée a une altitude maximale de moins de 11 mètres (36 pieds).
